# EUROPEAN PATENT APPLICATION

(11) **EP 4 538 154 A1**
(43) Date of publication of application: **16.04.2025**
(21) Application number: 23842381.8
(22) Date of filing: 20.07.2023
(51) Int. Cl.: B62H 1/12, B62K 9/00

(54) **TRAINING WHEEL ASSEMBLY AND BICYCLE**

(30) Priority: 20.07.2022 CN 202221886354 U
(71) Applicant: Dahon Tech (Shenzhen) Co., Ltd., Shenzhen, Guangdong 518105 (CN)
(72) Inventor: HUANG, Dongming, Shenzhen, Guangdong 518105 (CN); MO, Yiping, Shenzhen, Guangdong 518105 (CN); LI, Jingfeng, Shenzhen, Guangdong 518105 (CN)
(74) Representative: Reddie & Grose LLP
(86) International application number: PCT/CN2023/108327
(87) International publication number: WO 2024/017319

(57) **Abstract**

The present application relates to a training wheel assembly (10) and a bicycle. The training wheel assembly (10) comprises a mounting base (100) and a support (200); the mounting base (100) is configured to be mounted to a frame of the bicycle; and a mounting hole (101) runs through the mounting base (100). The support (200) has a first end (210) and a second end (220); a training wheel (300) is rotatably connected to the first end (210); and the mounting hole (101) runs through any one of the second end (220) and the mounting base (100), and the other one of the second end (220) and the mounting base (100) is configured to extend into the mounting hole (101) from any opening of the mounting hole (101) to be engaged.

## Description

### CROSS REFERENCE TO RELATED APPLICATION

This application claims priority to Chinese patent application No. 2022218863547, entitled "AUXILIARY WHEEL ASSEMBLY AND BICYCLE", filed on July 20, 2022, the entire content of which is incorporated herein by reference in its entirety.

### TECHNICAL FIELD

The present application relates to the technical field of bicycles, in particular, to an auxiliary wheel assembly and a bicycle.

### BACKGROUND

Conventional child's bicycles are generally equipped with auxiliary wheels near left and right sides of rear wheels of the bicycles. The auxiliary wheels can prevent the bicycle from rolling over and prevent child from falling down during riding.

However, it is inconvenient to assemble the auxiliary wheels onto and remove the auxiliary wheels from a frame of the conventional child's bicycle, and how to properly place the auxiliary wheels after removal is also a problem.

### SUMMARY

An auxiliary wheel assembly includes:
a mounting base configured to be mounted to a frame, a mounting hole extending through the mounting base; and
a bracket including a first end and a second end. An auxiliary wheel is rotatably connected to the first end. The mounting hole is disposed and extends through any one of the second end and the mounting base; and the other one of the second end and the mounting base is configured to be capable of being inserted into the mounting hole from any one of openings of the mounting hole and being engaged with the mounting hole.

In one of embodiments, the mounting base or the second end is further provided with an elastic hook. The elastic hook is configured to be capable of being elastically deformed when being pressed by a hole wall of the mounting hole, to extend into the mounting hole along with the second end, until the elastic hook extends through the mounting hole and is engaged with an edge of one of the openings of the mounting hole.

In one of embodiments, the mounting base is provided with the mounting hole. The second end is further provided with a limiting member spaced apart from and opposite to the elastic hook. The second end abuts against edges of two opposite openings of the mounting hole by the limiting member and the elastic hook respectively to be engaged with the mounting base.

In one of embodiments, the elastic hook is formed by folding an elastic piece.

In one of embodiments, the elastic hook is detachably connected to the second end.

In one of embodiments, the elastic hook and the bracket are integrally formed.

In one of embodiments, the mounting base includes a base body through which the mounting hole extends and a flat shaft rotatably extending through a hole wall of the mounting hole. The second end is provided with a limiting groove on a side adjacent to the mounting base. The limiting groove includes a limiting section and a locking section that are connected in sequence. The locking section has a width greater than a width of the limiting section. The width of the limiting section is equal to a minimum diameter of the flat shaft. When the second end is inserted into the mounting hole, the flat shaft is capable of sliding into the locking section along the limiting section of the limiting groove with the minimum diameter. When the flat shaft slides into the locking section, the flat shaft is configured to be capable of rotating relative to the locking section under an external force, until an angle is formed between a portion of the flat shaft having a maximum diameter and the limiting section, so that the flat shaft is engaged with a groove wall of the locking section.

In one of embodiments, the mounting base further includes a torsion spring. An end of the torsion spring is connected to the base body, and another end of the torsion spring is connected to the flat shaft. When the flat shaft slides into the locking section from the limiting section, the flat shaft is configured to be capable of resetting and rotating under an elastic force of the torsion spring so that the angle is formed between the portion of the flat shaft having the maximum diameter and the limiting section.

In one of embodiments, the limiting groove further includes a guiding section in communication with the limiting section. A width of the guiding section gradually decreases in a direction approaching the limiting section. The flat shaft is configured to be capable of gradually rotating against the elastic force of the torsion spring pressed by a groove wall of the guiding section, until a portion of the flat shaft having the minimum diameter is aligned with the limiting section, and the flat shaft slides into the limiting section from the guiding section.

In one of embodiments, the mounting base further includes a knob connected to an end of the flat shaft exposed from the base body. The knob is configured to be capable of driving the flat shaft to rotate under the external force.

A bicycle includes a frame and the auxiliary wheel assembly as described in any one of the embodiments.

### BRIEF DESCRIPTION OF THE DRAWINGS

In order to more clearly illustrate the technical solutions in the embodiments of the present application or the conventional technology, accompanying drawings that need to be used in the description of the embodiments or the conventional technology will briefly be introduced below. Obviously, the accompanying drawings in the following description only illustrate the embodiments of the present application, those skilled in the art can also conceive other drawings based on the disclosed drawings without creative effort.
FIG. 1 is a perspective view of an auxiliary wheel assembly according to an embodiment of the present application.
FIG. 2 is another schematic structural view of an auxiliary wheel assembly according to an embodiment of the present application, in which a mounting base is separated from a bracket.
FIG. 3 is a partial cross-sectional view of a second end of a bracket of the embodiment shown in FIG. 1 engaged to a mounting base.
FIG. 4 is a schematic view showing the bracket of the embodiment shown in FIG. 1 extending into a mounting hole from below the mounting hole.
FIG. 5 is a schematic view showing the bracket of the embodiment shown in FIG. 1 extending into a mounting hole from above the mounting hole.
FIG. 6 is a perspective view of an auxiliary wheel assembly according to another embodiment of the present application.
FIG. 7 is a schematic exploded view of an auxiliary wheel assembly according to another embodiment of the present application.
FIG. 8 is a partial cross-sectional view of a second end of a bracket of the embodiment shown in FIG. 7 engaged to a mounting base.
FIG. 9 shows a mounting process of the second end of the bracket and the mounting base of the embodiment shown in FIG. 7.
FIG. 10 is a schematic view of the bracket of the embodiment shown in FIG. 7 extending into a mounting hole from below the mounting hole.
FIG. 11 is a schematic view of the bracket of the embodiment shown in FIG. 7 extending into a mounting hole from above the mounting hole.

Illustration for reference signs:
10, auxiliary wheel assembly; 100, mounting base; 101, mounting hole; 110, base body; 120, flat shaft; 130, torsion spring; 140, knob; 200, bracket; 210, first end; 220, second end 230, elastic hook; 240, limiting member; 250, limiting groove; 251, guiding section; 252, limiting section; 253, locking section; 300, auxiliary wheel.

### DETAILED DESCRIPTION OF THE EMBODIMENTS

The technical solutions in the embodiments of the present application will be described clearly and completely below with reference to the attached drawings in the embodiments of the present application. Apparently, the described embodiments are only some of the embodiments of the present application, not all of them. Based on the embodiments in present application, all other embodiments obtained by persons of ordinary skill in the art without making creative efforts belong to the scope of protection of present application.

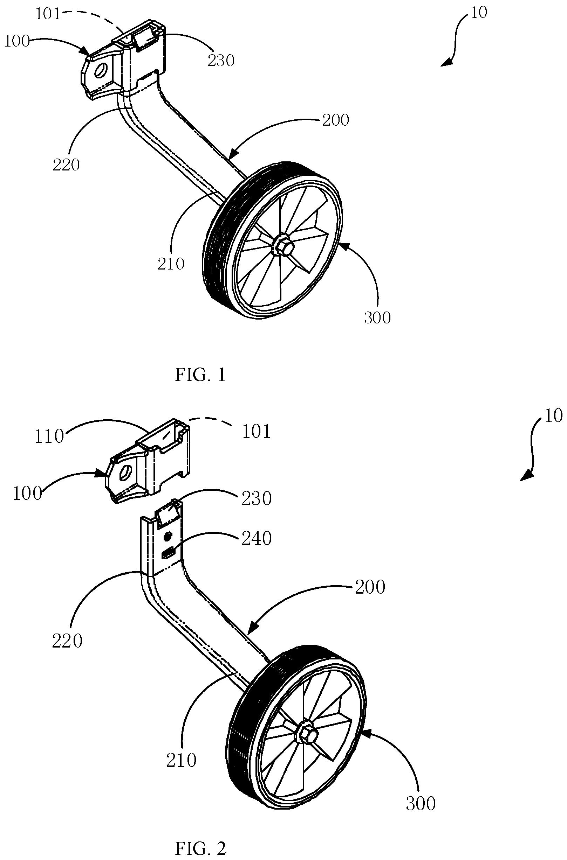

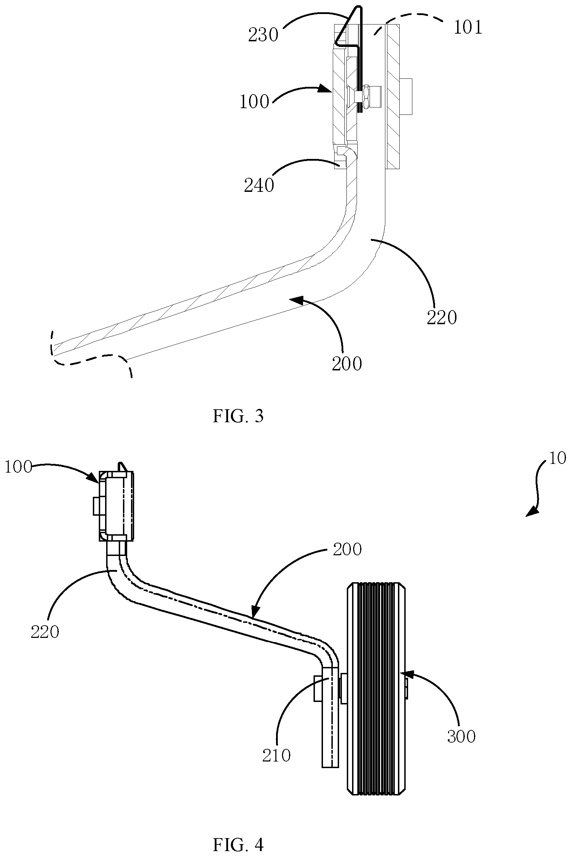

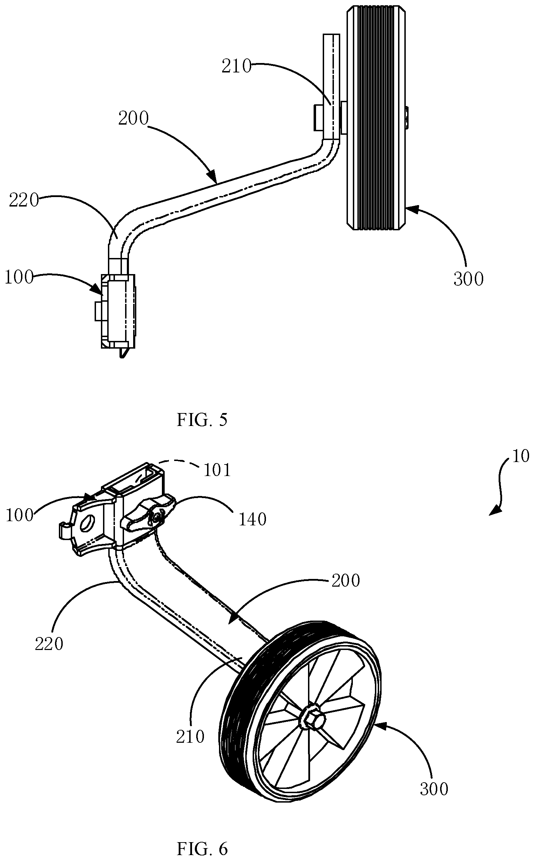

Referring to FIGS. 1 to 8, the present application provides an auxiliary wheel assembly 10 including a mounting base 100 and a bracket 200. The bracket 200 includes a first end 210 and a second end 220. An auxiliary wheel is rotatably connected to the first end 210. A mounting hole 101 is disposed in and extends through any one of the second end 220 and the mounting base 100. The other one of the second end 220 and the mounting base 100 is configured to be able to be inserted into the mounting hole 101 from any opening of the mounting hole 101 and be engaged with the mounting hole 101. For example, in an embodiment shown in FIGS. 1 to 4, the mounting hole 101 is disposed in and extends through the mounting base 100. The mounting base 100 can be configured to be mounted to a frame of a bicycle (not shown in figures). For example, the mounting base 100 can be mounted near a rear axle of the bicycle, and the mounting hole 101 is arranged substantially in a vertical direction, which can be considered that a length extending direction of the mounting hole 101 is substantially parallel to the vertical direction. As shown in FIGS. 4 and 5, the bracket 200 includes the first end 210 and the second end 220. The auxiliary wheel 300 is rotatably connected to the first end 210. The second end 220 is configured to be able to be inserted into the mounting hole 101 from any opening of the mounting hole 101 to be engaged with the mounting base 100. The mounting hole 101 has two openings, as shown in FIGS. 1 and 4, when a user wants to mount the auxiliary wheels 300 to the bicycle, it is only necessary to insert the second end 220 of the bracket 200 into the mounting hole 101 from the lower opening the mounting hole 101 to engage the bracket 200 with the mounting base 100, unlike that an auxiliary wheel 300 of a conventional bicycle requiring an additional mounting tool for mounting itself. In this case, the auxiliary wheel 300 at the first end 210 of the bracket 200 is close to the ground, which can play a supporting role and prevent rolling over. As shown in FIGS. 2 and 5, when the user does not want to use the auxiliary wheel 300, the user can remove the bracket 200 from the mounting base 100, and then insert the second end 220 of the bracket 200 into the mounting hole 101 from above the mounting hole 101 of the mounting base 100. That is, in this case, the first end 210 of the bracket 200 is positioned upward, and the auxiliary wheel 300 at the first end 210 is far away from the ground. It can be considered that the bracket 200 is mounted by reversed inserting. In this way, the auxiliary effect of the auxiliary wheel 300 on the bicycle can be removed, and the storage of the bracket 200 can be realized, so that the auxiliary wheel 300 and the bracket 200 can be carried along during the riding process, and the bracket 200 can be immediately removed and remounted again when necessary. In addition, such a configuration can also reduce the packaging volume of the bicycle, which is convenient for transportation and warehouse storage. For example, when leaving the factory, the mounting base 100 can be mounted on the frame, and the bracket 200 with the auxiliary wheel 300 can be packaged separately.

Referring to FIGS. 1, 2, and 3, in a first embodiment, the second end 220 of the bracket 200 is provided with an elastic hook 230. The elastic hook 230 is configured to be able to be elastically deformed when being pressed by a hole wall of the mounting hole 101, to be inserted into the mounting hole 101 along with the second end 220, until the elastic hook 230 extends through the mounting hole 101 and is engaged with an edge of an opening of the mounting hole 101. When the user wants to connect the bracket 200 with the mounting base 100, the user only needs to insert the second end 220 of the bracket 200 and the elastic hook 230 of the second end 220 into an opening of the mounting hole 101, and when the elastic hook 230 extends out of an opening of the mounting hole 101 at another side, the elastic hook 230 can be engaged with an edge of the opening of the mounting hole 101, so as to realize the mounting. When the user wants to separate the bracket 200 from the mounting base 100, the user can properly press the elastic hook 230 with his/her hands to separate the elastic hook 230 from the edge of the opening of the mounting hole 101, and then pull the bracket 200 out of the mounting hole 101 to realize the removal of the bracket 200. It can be seen that the user does not need to use any additional mounting tools during the entire removing process of the bracket 200, and thus, the operation is more convenient.

In other embodiments, the mounting hole 101 may also be disposed at the second end 220 of the bracket 200, and the elastic hook 230 is disposed on the mounting base 100. In other words, the present application does not limit the specific positions of the mounting hole 101 and the elastic hook 230, which is intended that the mounting base 100 can be connected to the second end 220 of the bracket 200.

As shown in FIG. 3, in some embodiments, the elastic hook 230 is formed by folding an elastic piece. The elastic hook 230 formed by folding the elastic piece can be connected to the mounting base 100 by a fixed connection such as bonding or welding, or by a detachable connection such as threaded connection or engagement. The detachable connection between the elastic hook 230 and the mounting base 100 is beneficial for later maintenance, such as removing and replacing the elastic piece separately when it ages. In the other embodiments, the elastic hook 230 and the bracket 200 may also be integrally formed. It can be understood that the elastic hook 230 can also be directly formed by a portion of the second end 220 of the bracket 200, as long as the elastic hook 230 can have a certain amount of elastic deformation, so that the elastic hook 230 can be deformed by being pressed by the hole wall of the mounting hole 101 and extends through the mounting hole 101.

Further, as shown in FIGS. 1, 2 and 3, in some embodiments, the second end 220 is further provided with a limiting member 240 spaced apart from and opposite to the elastic hook 230. The second end 220 abut against the edges of two opposite openings of the mounting hole 101 by the limiting member 240 and the elastic hook 230 respectively to engage with the mounting base 100.

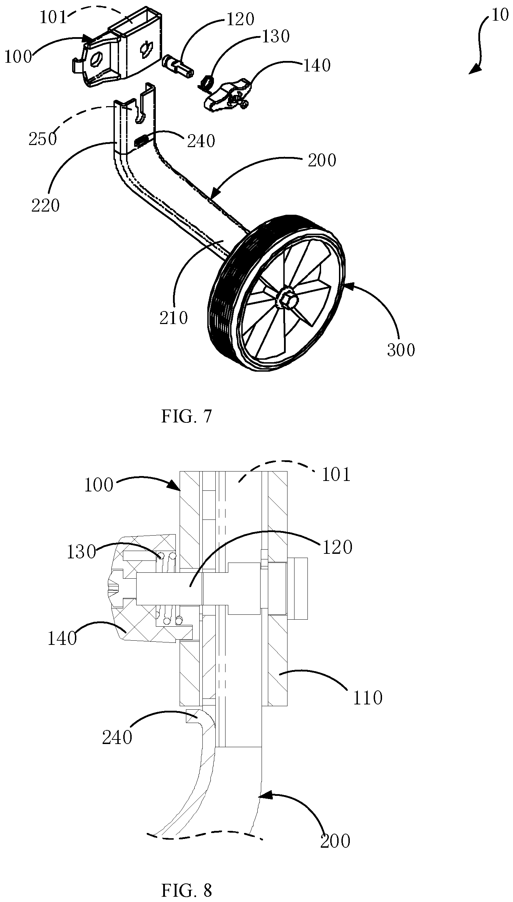

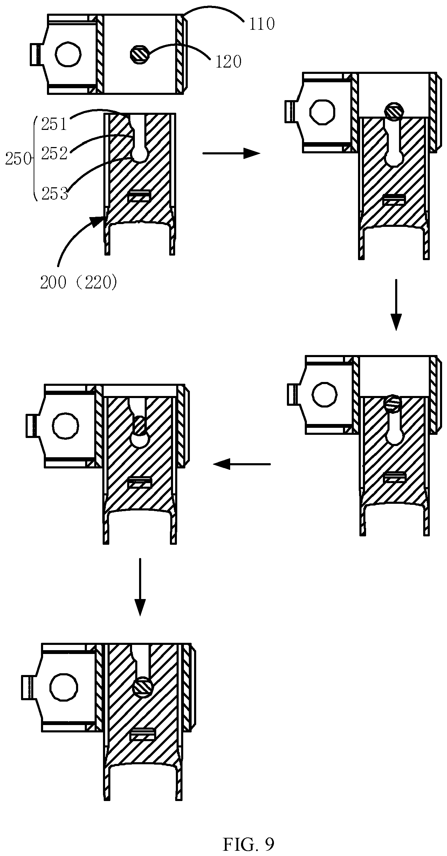

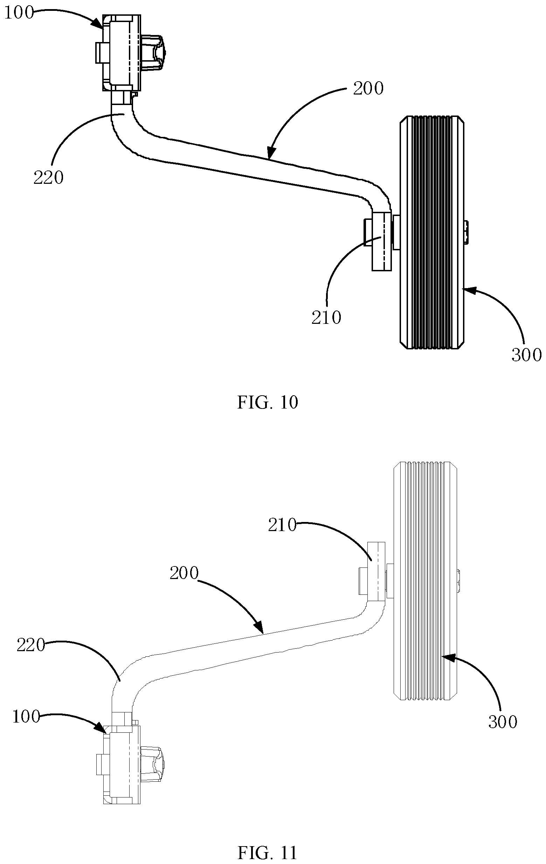

Referring to FIGS. 6 to 11, in a second embodiment, the mounting base 100 includes a base body 110 through which a mounting hole 101 extends, and a flat shaft 120 rotatably extending through a hole wall of the mounting hole 101. As shown in FIGS. 7 and 9, a second end 220 is provided with a limiting groove 250 on a side adjacent to the mounting base 100. The limiting groove 250 includes a limiting section 252 and a locking section 253 that are connected in sequence. The locking section 253 has a width greater than a width of the limiting section 252. The width of the limiting section 252 is equal to the minimum diameter of the flat shaft 120. When the second end 220 is inserted into the mounting hole 101, the flat shaft 120 can slide into the locking section 253 along the limiting section 252 of the limiting groove 250 with the minimum diameter. When the flat shaft 120 slides into the locking section 253, the flat shaft 120 is configured to be able to rotate relative to the locking section 253 under an external force, until an angle is formed between a portion of the flat shaft 120 having the maximum diameter and the limiting section 252, so that the flat shaft 120 is engaged with a groove wall of the locking section 253. It can be understood that a cross-sectional outer profile of the flat shaft 120 is approximately elliptical, and the maximum diameter of the flat shaft 120 can be considered as a long axis of the ellipse, and a minimum diameter of the flat shaft 120 can be considered as a short axis of the ellipse. During the mounting, the flat shaft 120 firstly extends through the limiting section 252 of the limiting groove 250 with the portion thereof having the minimum diameter, that is, the flat shaft 120 extends through the limiting section 252 of the limiting groove 250 with the portion having a cross section of the minimum width. After the flat shaft 120 enters the locking section 253, the flat shaft 120 is rotated and engaged. It should be emphasized that the above description is only a schematic representation of the cross-sectional profile of the flat shaft 120, and does not indicate or imply that the cross-sectional profile of the flat shaft 120 has to be the same as above.

Further, as shown in FIGS. 7 and 8, in some embodiments, the mounting base 100 further includes a torsion spring 130. An end of the torsion spring 130 is connected to the base body 110, and another end of the torsion spring 130 is connected to the flat shaft 120. When the flat shaft 120 slides into the locking section 253 from the limiting section 252, the flat shaft 120 is configured to be able to reset and rotate under the elastic force of the torsion spring 130 so that the angle is formed between the portion of the flat shaft 120 having the maximum diameter and the limiting section 252. Due to the arrangement of the torsion spring 130, the flat shaft 120 can automatically reset after entering the locking section 253 from the limiting section 252, that is, without manual intervention, the flat shaft 120 can rotate so that the angle is formed between the portion of the flat shaft 120 having the maximum diameter and the limiting section 252. Furthermore, when the portion of the flat shaft 120 having the maximum diameter is perpendicular to an extending direction of the length of the limiting section 252, the flat shaft 120 is well engaged and fixed with the locking section 253 of the limiting groove 250.

Further, as shown in FIG. 9, in some embodiments, the limiting groove 250 further includes a guiding section 251 connected with the limiting section 252. A width of the guiding section 251 gradually decreases in a direction approaching the limiting section 252. The flat shaft 120 is configured to be able to gradually rotate against the elastic force of the torsion spring 130 pressed by a groove wall of the guiding section 251, until the portion of the flat shaft 120 having the minimum diameter is aligned with the limiting section 252, and the flat shaft 120 slides into the limiting section 252 from the guiding section 251. When the user inserts the second end 220 of the bracket 200 into the mounting hole 101, the flat shaft 120 firstly slides into the guiding section 251 with a gradually decreasing width (which means that the guiding section 251 gradually narrows in the direction approaching the limiting section 252), and the guiding section 251 can play a certain guiding role, so that the flat shaft 120 is rotated against the elastic force of the torsion spring 130 under the action of the groove wall of the guiding section 251, and finally the flat shaft 120 is rotated to a position where the portion of the flat shaft 120 having the minimum diameter is parallel to a width direction of the limiting section 252 (which means that the portion of the flat shaft 120 having the minimum diameter is aligned with the limiting section 252), and in this case, the flat shaft 120 can slide into the limiting section 252 by itself. In other words, due to the arrangement of the guiding section 251, the flat shaft 120 can rotate and adjust itself along the guiding section 251 without manual operation of the flat shaft 120, until the flat shaft 120 rotates to a position where the flat shaft 120 can slide into the limiting section 252, which is beneficial to simplify the operation.

Further, as shown in FIGS. 7 and 8, in some second embodiments, the second end 220 is further provided with a limiting member 240. The limiting member 240 is positioned on a side of the second end 220 away from the limiting groove 250 and away from an opening end, that is, the limiting member 240 is positioned on a side of the locking section 253 away from the guiding section 251.

As shown in FIGS. 6, 7, and 8, in some embodiments, the mounting base 100 further includes a knob 140. The knob 140 is connected to an end of the flat shaft 120 exposed from the base body 110. The knob 140 is configured to be able to drive the flat shaft 120 to rotate under the external force. When the user wants to remove the bracket 200 from the mounting base 100, the knob 140 can be operated to drive the flat shaft 120 to rotate against the elastic force of the torsion spring 130, so as to adjust the portion of the flat shaft 120 having the minimum diameter to be aligned with the limiting section 252, thereby taking out the flat shaft 120 by sliding through the limiting section 252. The connection between the knob 140 and the flat shaft 120 may be a fixed connection such as bonding or welding, or may be a detachable connection. As in the embodiment shown in FIGS. 7 and 8, the connection between the knob 140 and the flat shaft 120 are a threaded connection. It should be noted that an end of the torsion spring 130 may be connected to the base body 110, and another end of the torsion spring 130 may be directly connected to the knob 140, that is, the connection between the torsion spring 130 and the flat shaft 120 can be regarded as an indirect connection between the torsion spring 130 and the flat shaft 120 through the knob 140.

In addition, the present application further discloses a bicycle (not shown in figures), which includes a frame and the auxiliary wheel assembly 10 according to any one of the above-mentioned embodiments.

For the aforementioned bicycle, the mounting base 100 of the auxiliary wheel assembly 10 can be directly mounted on the frame, for example, mounted near a rear axle of the bicycle. The mounting hole 101 extending through the mounting base 100 includes two openings. When the user wants to mount auxiliary wheels 300 to the bicycle, it is only necessary to insert the second end 220 of the bracket 200 into the mounting hole 101 from the lower opening of the mounting hole 101 to engage the bracket 200 with the mounting base 100, unlike that an auxiliary wheel 300 of a conventional bicycle requiring an additional mounting tool for mounting itself. In this case, the auxiliary wheel 300 at the first end 210 of the bracket 200 is close to the ground, which can play a supporting role and prevent rolling over. When the user does not want to use the auxiliary wheel 300, the user can remove the bracket 200 from the mounting base 100, and then insert the second end 220 of the bracket 200 into the mounting hole 101 from above the mounting hole 101 of the mounting base 100. That is, in this case, the first end 210 of the bracket 200 is positioned upward, and the auxiliary wheel 300 at the first end 210 is far away from the ground. It can be considered that the bracket 200 is mounted by reversed inserting. In this way, the auxiliary effect of the auxiliary wheel 300 on the bicycle can be removed, and the storage of the bracket 200 can be realized, so that the auxiliary wheel 300 and the bracket 200 can be carried along during the riding process, and the bracket 200 can be immediately removed and remounted again when necessary. In addition, such a configuration can also reduce the packaging volume of the bicycle, which is convenient for transportation and warehouse storage. For example, when leaving the factory, the mounting base 100 can be mounted on the frame, and the bracket 200 with the auxiliary wheel 300 can be packaged separately.

The technical features of the above-described embodiments can be combined arbitrarily. To simplify the description, not all possible combinations of the technical features in the above embodiments are described. However, all of the combinations of these technical features should be considered as being fallen within the scope of the present application, as long as such combinations do not contradict with each other.

The foregoing embodiments merely illustrate some embodiments of the present application, and descriptions thereof are relatively specific and detailed. However, it should not be understood as a limitation to the patent scope of the present application. It should be noted that, a person of ordinary skill in the art may further make some variants and improvements without departing from the concept of the present application, and the variants and improvements falls in the protection scope of the present application. Therefore, the protection scope of the present application shall be subject to the appended claims.

In the description of the present application, it should be understood that terms "length", "width", "thickness", "center", "longitudinal", "transverse", "upper", "lower", "front", "back", "left", "right", "vertical", "horizontal", "top", "bottom", "inner", "outer", "clockwise", "counterclockwise", "axial", "radial", "circumferential" and other indicated orientations or positional relationships are based on the orientations or positional relationships shown in the drawings, and are only for the convenience of describing the present application and simplifying the description, rather than indicating or implying the indicated device or elements must have certain orientations, be constructed and operate in certain orientations, and thus should not be construed as limiting the present application.

In addition, terms "first" and "second" are used for descriptive purposes only, and cannot be interpreted as indicating or implying relative importance or implicitly specifying the quantity of indicated technical features. Thus, the features defined by "first" and "second" may explicitly or implicitly include at least one of these features. In the description of the present application, "plurality" means at least two, such as two, three, etc., unless otherwise specifically defined.

In this application, unless otherwise clearly specified and defined, terms such as "mounting", "coupling", "connecting" and "fixing" should be interpreted in a broad sense, for example, it may be a fixed connection or a detachable connection, or integrated formation; or it may be a mechanical connection or an electrical connection; or, it may be a direct connection or an indirect connection through an intermediate medium; or it may be a communication between two components or the interaction relationship between two components, unless otherwise specified defined. For those of ordinary skill in the art, the specific meanings of the above terms in the present application can be understood according to specific situations.

In the present application, unless otherwise clearly specified and defined, a first feature being "on" or "under" a second feature may mean that the first feature and the second feature are in a direct contact, or that the first feature and the second feature are in an indirect contact through an intermediate medium. Moreover, a first feature being "above", "over" and "on the top of" a second feature may mean that the first feature is directly above or obliquely above the second feature, or simply means that the first feature is higher in level than the second feature. A first feature being "below", "beneath" and "under" the second feature may mean that the first feature is directly below or obliquely below the second feature, or simply means that the first feature is lower in level than the second feature.

It should be noted that when an element is referred to as being "arranged on", "fixed on" or "disposed on" another element, it may be directly on the other element or there may be an intermediate element. When an element is referred to as being "connected to" another element, it can be directly connected to the other element or an intermediate element may also be present. As used herein, the terms "vertical", "horizontal", "upper", "lower", "left", "right" and similar expressions are for the purpose of illustration only and are not intended to represent the only embodiments.

## Claims

1. An auxiliary wheel assembly, comprising:
a mounting base configured to be mounted to a frame; and
a bracket comprising a first end and a second end,
wherein an auxiliary wheel is rotatably connected to the first end; a mounting hole is disposed and extends through any one of the second end and the mounting base; and the other one of the second end and the mounting base is configured to be capable of being inserted into the mounting hole from any one of openings of the mounting hole and being engaged with the mounting hole.

2. The auxiliary wheel assembly of claim 1, wherein the mounting base or the second end is provided with an elastic hook; the elastic hook is configured to be capable of being elastically deformed when being pressed by a hole wall of the mounting hole, to extend into the mounting hole, until the elastic hook extends through the mounting hole and is engaged with an edge of one of the openings of the mounting hole.

3. The auxiliary wheel assembly of claim 2, wherein the mounting base is provided with the mounting hole; the second end is further provided with a limiting member spaced apart from and opposite to the elastic hook; and the second end abuts against edges of two opposite openings of the mounting hole by the limiting member and the elastic hook respectively to be engaged with the mounting base.

4. The auxiliary wheel assembly of claim 2 or 3, wherein the elastic hook is formed by folding an elastic piece.

5. The auxiliary wheel assembly of claim 2 or 3, wherein the elastic hook and the bracket are integrally formed.

6. The auxiliary wheel assembly of claim 1, wherein the mounting base comprises a base body through which the mounting hole extends and a flat shaft rotatably extending through a hole wall of the mounting hole; the second end is provided with a limiting groove on a side adjacent to the mounting base; the limiting groove comprises a limiting section and a locking section that are connected in sequence; the locking section has a width greater than a width of the limiting section; the width of the limiting section is equal to a minimum diameter of the flat shaft; when the second end is inserted into the mounting hole, the flat shaft is capable of sliding into the locking section along the limiting section of the limiting groove with the minimum diameter; when the flat shaft slides into the locking section, the flat shaft is configured to be capable of rotating relative to the locking section under an external force, until an angle is formed between a portion of the flat shaft having a maximum diameter and the limiting section, so that the flat shaft is engaged with a groove wall of the locking section.

7. The auxiliary wheel assembly of claim 6, wherein the mounting base further comprises a torsion spring, an end of the torsion spring is connected to the base body, and another end of the torsion spring is connected to the flat shaft; when the flat shaft slides into the locking section from the limiting section, the flat shaft is configured to be capable of resetting and rotating under an elastic force of the torsion spring so that the angle is formed between the portion of the flat shaft having the maximum diameter and the limiting section.

8. The auxiliary wheel assembly of claim 7, wherein the limiting groove further comprises a guiding section in communication with the limiting section; a width of the guiding section gradually decreases in a direction approaching the limiting section; the flat shaft is configured to be capable of gradually rotating against the elastic force of the torsion spring pressed by a groove wall of the guiding section, until a portion of the flat shaft having the minimum diameter is aligned with the limiting section, and the flat shaft slides into the limiting section from the guiding section.

9. The auxiliary wheel assembly of claim 2 or 3, wherein the elastic hook is detachably connected to the second end.

10. The auxiliary wheel assembly of any one of claims 6 to 8, wherein the mounting base further comprises a knob connected to an end of the flat shaft exposed from the base body; and the knob is configured to be capable of driving the flat shaft to rotate under the external force.

11. The auxiliary wheel assembly of claim 10, wherein the knob is fixedly connected to the flat shaft.

12. The auxiliary wheel assembly of claim 10, wherein the knob is detachably connected to the flat shaft.

13. The auxiliary wheel assembly of claim 12, wherein the knob is threadedly connected to the flat shaft.

14. A bicycle, comprising:
a frame; and
the auxiliary wheel assembly of any one of claims 1 to 10.

15. The bicycle of claim 14, wherein the mounting base is mounted at a rear axle of the frame.
